# FASCICULE DE BREVET EUROPEEN

(11) **EP 0 615 072 B1**
(45) Date de publication et mention de la délivrance du brevet: **11.06.1997**
(21) Numéro de dépôt: 94400470.4
(22) Date de dépôt: 04.03.1994
(51) Int. Cl.: F16B 21/09

(54) **Dispositif de liaison et de blocage entre un profilé de support et un chevron ou élément analogue**
Verbindungs- und Verriegelungsvorrichtung zwischen einem Profilträger und einem Sparren oder einem ähnlichen Element
Connecting and blocking device between a support profile and a chevron or similar element

(30) Priorité: 10.03.1993 FR 9302775
(43) Date de publication de la demande: 14.09.1994
(73) Titulaire: ALCAN FRANCE, F-31037 Toulouse Cedex (FR)
(72) Inventeur: Lourenco, Jean-Louis, F-31100 Toulouse (FR); Pacheco, José Manuel, F-31560 Nailloux (FR)
(74) Mandataire: Benech, Frédéric

(56) Documents cités:
- DE-A- 1 951 390
- GB-A- 160 448
- GB-A- 2 028 959
- US-A- 3 188 730

## Description

La présente invention est relative à un assemblage entre un profilé de support et un chevron ou élément analogue au moyen d'un dispositif de liaison et de blogage, en particulier pour la construction de toitures de vérandas ou de verrières dont la charpente est réalisée en menuiseries métalliques, un tel élément étant disposé en porte à faux vis-à-vis du profilé de support et solidarisé de ce dernier à une de ses extrémités.

Dans les assemblages de ce genre, la liaison et le blocage entre un profilé de support et un chevron ou autre élément de structure porté par ce profilé et s'étendant transversalement vis-à-vis de ce dernier, sont obtenus à l'aide de moyens classiques, en utilisant par exemple des vis traversant des perçages prévus dans le profilé et le chevron et coopérant avec un écrou ou encore des embouts de liaison vissés, des boulons à tête...

Mais ces moyens de liaison mis en place directement sur le chantier, exigent généralement une préparation du profilé et du chevron qui peut être relativement longue, notamment en exigeant la formation préalable des perçages, l'introduction des vis de fixation et enfin le vissage et le blocage de ces dernières. En outre, ces systèmes sont peu efficaces et ne permettent pas d'assurer une stabilité parfaite des ouvrages, en étant dépourvus de tout moyen permettant de rapprocher mutuellement les faces de coupe en contact mutuel respectivement du profilé et du chevron.

Le DE-A 1 951 390 décrit une agrafe en matière plastique déformable, comportant un corps avec un passage pour un doigt de fixation sur un support, ce passage étant prolongé dans la plaquette par une rainure longitudinale dont la direction fait un angle avec une face de contact de l'agrafe contre ce support, consécutivement au déplacement du doigt dans la rainure, qui repousse le corps de l'agrafe vers cette face de contact.

Toutefois, une telle solution essentiellement prévue pour la fixation de baguettes amovibles sur le support en vue du maintien d'un pare-brise notamment, n'est pas applicable à la fixation d'un chevron sur un profilé et surtout ne permettrait pas un blocage assuré de ces deux pièces, en particulier selon deux directions perpendiculaires.

La présente invention a pour objet un assemblage qui permet d'éviter ces inconvénients, en réalisant une liaison sûre et efficace entre deux éléments, notamment quoique non exclusivement, du type profilé de support et chevron de toiture, disposés perpendiculairement ou non l'un par rapport à l'autre, ce dispositif permettant en outre d'assurer automatiquement l'accostage précis et la mise en contact entre ces deux éléments l'un contre l'autre afin d'améliorer la stabilité du noeud ainsi constitué, ce dispositif pouvant en outre être facilement mis en oeuvre sur un chantier, sans exiger d'opérations préalables de perçage ou de vissage à l'aide d'un outillage spécifique.

A cet effet, l'assemblage considéré, formé d'un profilé de support et d'un chevron ou d'un élément de structure analogue, réunis par un dispositif de liaison et de blocage de l'un par rapport à l'autre, le profilé de support comportant une face plane de contact contre laquelle s'applique le flan également plan du chevron, ce dispositif de liaison étant constitué par un verrou en deux parties dont l'une en forme de plaquette présente un trou de passage pour la seconde partie, constituée par un doigt à tête épaulée, ce passage étant prolongé dans la plaquette par au moins une rainure longitudinale, dont la direction fait un angle fermé avec la face de contact du profilé de support, est caractérisé en ce que le profilé de support présente une plateforme, comprenant un épaulement d'appui pour le chevron, cette plateforme s'étendant perpendiculairement à la face plane de contact du profilé et délimitant avec le chevron un logement ouvert recevant la plaquette du verrou qui comporte un talon en appui sur la plateforme, le doigt formant la seconde partie de ce verrou étant solidaire du chevron et s'étendant à partir de celui-ci pour disposer sa tête épaulée au-delà du passage prévu dans la plaquette contre la surface de celle-ci, laquelle est taillée en coin pour former également un angle fermé avec le plan de l'épaulement d'appui.

De préférence, la plaquette du verrou comporte deux rainures identiques, symétriques et opposées, débouchant transversalement dans le trou de passage recevant le doigt solidaire du chevron, la largeur de chacune de ces rainures étant telle que ce doigt puisse parcourir librement la rainure où il s'engage, depuis ce passage jusqu'au point de serrage, en déplaçant le chevron vis-à-vis du profilé de support pour appliquer étroitement son flan contre la face plane de contact de ce profilé.

Selon une autre caractéristique préférée de l'assemblage considéré, la plaquette du verrou présente un contour rectangulaire et comporte, selon l'un de ses grands côtés une bordure en saillie, propre à être engagée dans une gorge de même section ménagée dans le logement de la plateforme de l'épaulement du profilé de support qui reçoit cette plaquette.

Avantageusement, la plaquette comporte à l'opposé de sa bordure en saillie un talon plan, adapté à s'appuyer sur le fond du logement pour immobiliser la plaquette vis-à-vis du profilé de support, consécutivement à l'engagement de sa bordure dans la gorge du logement en position relevée et à un pivotement de cette bordure sur le profil circulaire de cette gorge vers l'épaulement.

Selon une autre caractéristique préférée également, l'épaulement du profilé de support comporte un rebord extérieur évasé, qui ferme le logement de la plateforme au-delà du talon de la plaquette, ce rebord étant muni d'une ailette déformable de blocage de cette plaquette dans le logement.

Selon encore une autre caractéristique préférée, le doigt épaulé porté par le chevron comporte une extrémité filetée, coopérant de part et d'autre d'un perçage du chevron respectivement avec un écrou et une rondelle, immobilisant le doigt dans une position réglable où sa tête épaulée fait saillie sous le chevron sur une distance suffisante pour lui permettre de traverser le trou de passage prévu dans la plaquette du verrou en venant en contact sur la face opposée taillée en coin de celle-ci, de telle sorte que le déplacement du doigt dans les rainures de la plaquette provoque également et simultanément l'application du chevron contre l'épaulement.

Les caractéristiques d'un assemblage comportant un dispositif de liaison et de blocage établi conformément à l'invention apparaîtront encore à travers la description qui suit d'un exemple de réalisation, donné à titre indicatif et non limitatif, en référence aux dessins annexés sur lesquels :
- La Figure 1 est une vue schématique en coupe transversale d'un profilé de support et d'un chevron à réunir par un dispositif de liaison selon l'invention, le profilé de support et le chevron étant représentés avant mise en oeuvre du verrou de blocage.
- La Figure 2 est une vue de détail de la Figure 1, illustrant les mêmes pièces que cette dernière mais après engagement du doigt à tête épaulée dans le trou de passage de la plaquette du verrou.
- La Figure 3 est une vue partielle du dessus du verrou du dispositif.
- La Figure 4 est une vue à plus grande échelle des diverses parties de ce verrou, permettant d'en expliciter plus complètement la description et le fonctionnement.

Sur ces figures, la référence 1 désigne un profilé de support, entrant dans la construction d'une toiture de véranda ou analogue, la référence 2 désignant pour sa part un chevron ou autre pièce de structure d'une telle véranda qui, de façon générale, est réalisée au moyen de profilés métalliques adaptés à venir se fixer et se bloquer ensemble, le profilé de support étant prévu pour assurer par exemple le maintien en position horizontale ou éventuellement avec une inclinaison donnée quelconque du chevron. L'assemblage selon l'invention a pour objet de permettre un accostage précis de ce chevron 2 sur le profilé 1, puis un rapprochement mutuel de ces deux pièces, avec entre elles une liaison mécanique sûre, présentant une grande stabilité une fois ces deux pièces solidement bloquées l'une par rapport à l'autre et qui puisse être mise en oeuvre sur un chantier de construction sans exiger sur place une préparation particulière de ces pièces, ni exiger des monteurs une qualification élevée.

Le profilé de support 1 comporte principalement un voile 3 qui, dans l'exemple de réalisation considéré, est représenté sensiblement vertical et qui comporte une face d'appui plane 4 contre laquelle est destiné à venir s'appuyer un flan également plan 5 en bout du chevron 2.

Le profilé de support 1 comporte par ailleurs une plateforme 6 qui forme un épaulement 7 adapté à servir d'appui à un flasque 8 constituant la partie inférieure du chevron 2, une fois ce dernier convenablement appliqué et immobilisé vis-à-vis du profilé 1. La plateforme 6 délimite un logement ouvert 9, destiné à recevoir un verrou 10 en deux parties, respectivement portées par le profilé 1 et le chevron 2 afin de permettre, selon l'invention, l'accostage et le blocage de ces deux pièces l'une par rapport à l'autre.

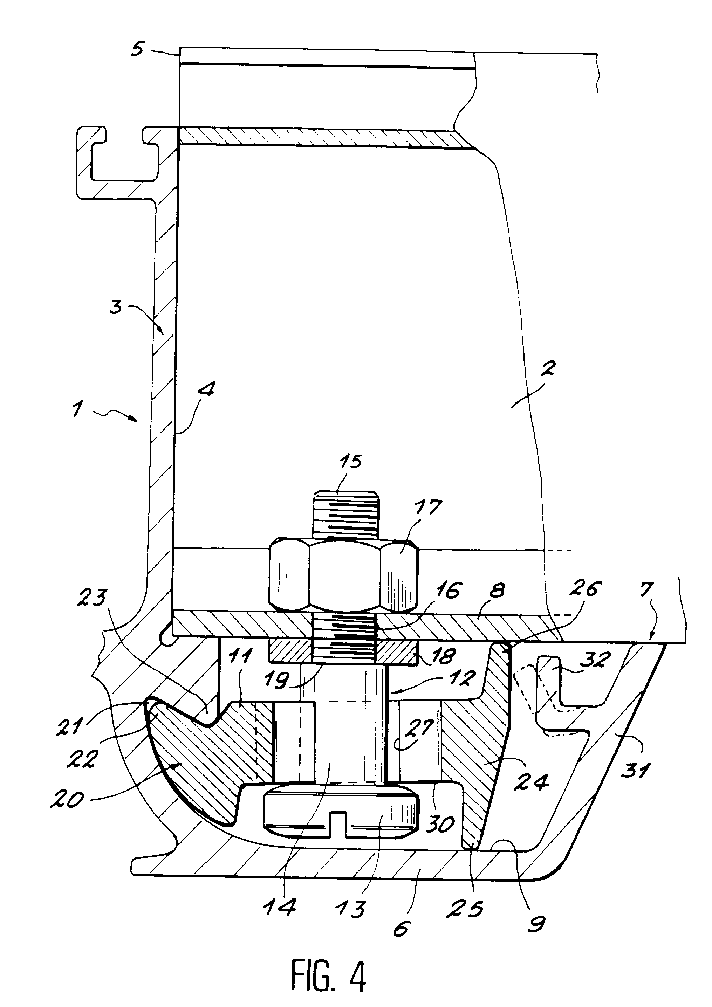

Les deux parties de ce verrou sont constituées respectivement d'une plaquette 11, dont les dimensions et le profil sont adaptés pour lui permettre de s'engager et de s'immobiliser dans le logement 9 de la plateforme 6, et d'un doigt 12, comportant une tête épaulée 13 ménagée à l'extrémité de la partie centrale 14 de ce doigt, celle-ci se prolongeant par une extrémité filetée 15. Dans l'exemple représenté, cette extrémité traverse un perçage 16 (Figure 4) ménagé dans le flasque 8 du chevron 2 et coopère, au-delà de celui-ci, avec un écrou 17, propre à immobiliser le doigt 12 par l'intermédiaire d'une rondelle de serrage 18 disposée entre le flasque 8 et une collerette d'appui 19 prévue à l'extrémité de la partie centrale 14 du doigt 12, à l'opposé de la tête 13.

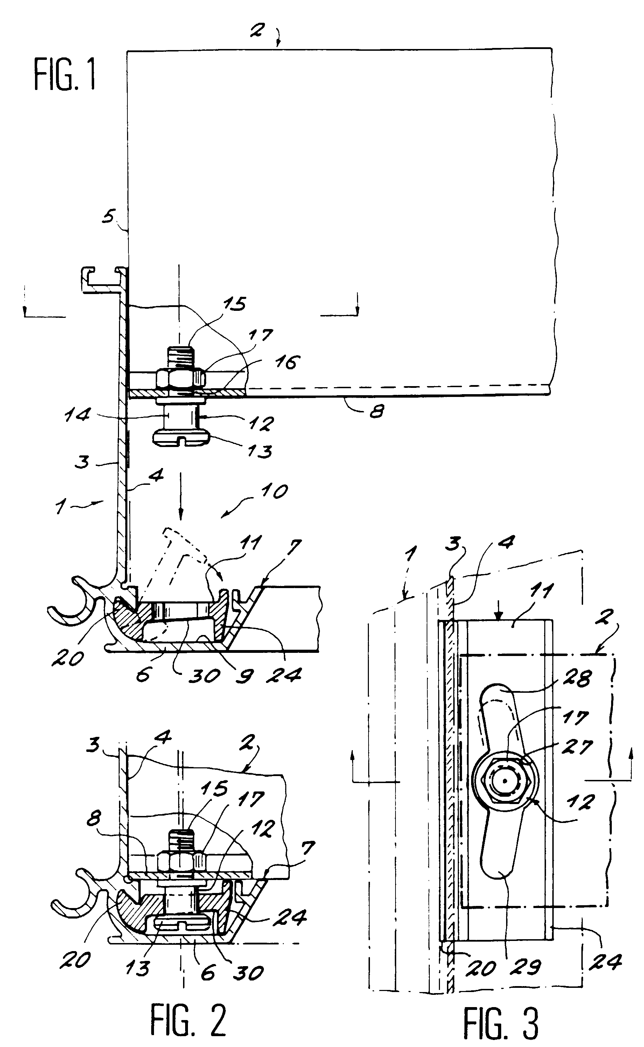

La plaquette 11 du verrou comporte, comme on le voit également plus en détail sur les Figures 3 et 4, un profil sensiblement rectangulaire, dont les grands côtés s'étendent parallèlement au voile 3 du profilé 1. Vers ce voile, la plaquette 11 comporte une bordure latérale 20, faisant saillie vers l'extérieur de la plaquette et dont la section est déterminée de manière à lui permettre de s'engager à l'intérieur d'une gorge ouverte 21, prévue dans le logement 9 de la plateforme 6.

Dans le mode de réalisation représenté, la bordure 20 comporte une extrémité effilée 22 telle que celle-ci puisse venir se placer sous un bec 23 ménagé à l'extrémité inférieure du voile 3, la plaquette 11 étant présentée approximativement en position verticale au-dessus du logement ouvert 9, comme schématisé en traits mixtes sur la Figure 3, avant qu'elle ne soit rabattue en direction de l'épaulement 7 vers le fond du logement contre la plateforme 6, l'extrémité 22 de la bordure 20 pivotant alors sous le bec 23 pour se disposer au fond de la gorge 21 en emprisonnant finalement la plaquette de la façon plus particulièrement illustrée sur les Figures 2 et 4.

La plaquette 11 comporte par ailleurs, à l'opposé de la bordure 20, un talon plat 24 dont l'extrémité inférieure 25 vient, en fin de mouvement d'engagement et de pivotement de la plaquette dans le logement 9, s'appuyer contre le fond de ce logement sur la plateforme 6. A l'opposé, le talon 24 comporte une butée 26 sur laquelle repose le flasque 8 du chevron 2 lorsque ce dernier est mis en place dans le profilé de support 1.

La plaquette 11 comporte par ailleurs, sensiblement en son centre, un trou de passage 27 dont les dimensions sont telles qu'elles permettent le libre passage de la tête épaulée 13 du doigt 12. A ce trou se raccordent deux rainures respectivement 28 et 29, symétriques l'une de l'autre et orientées dans le plan de la plaquette 11 de telle sorte qu'elles soient légèrement inclinées en direction de la face plane 4 du voile 3 du profilé de support 1, la direction de ces rainures formant avec celle du plan de cette face un angle fermé, de quelques degrés. Les rainures 28 et 29 présentent une largeur légèrement supérieure à celle de la partie centrale 14 du doigt 12 mais inférieure à celle de la tête 13.

Par ailleurs, la hauteur du talon 24 est déterminée par construction de telle sorte que, une fois son extrémité inférieure 25 en appui sur le fond du logement 9, la face inférieure 30 de la plaquette soit légèrement inclinée, sur l'horizontale dans l'exemple considéré, et en tous cas fasse avec le plan de la plateforme 6, un angle fermé analogue, également de quelques degrés.

Le profilé de support 1 peut enfin comporter, à l'extrémité de la plateforme 6, un rebord extérieur évasé 31, se situant au-delà du talon 24 lorsque la plaquette 11 est mise en place dans le logement 9, ce rebord comportant une ailette coudée 32 dirigée vers l'intérieur du logement et réalisée de manière à pouvoir subir une déformation mécanique afin de venir s'appuyer contre la butée 26 prolongeant le talon 24, en immobilisant la plaquette comme le montre la vue en coupe de la Figure 4 où l'ailette 32 est représentée dans cette dernière position en traits interrompus.

La mise en oeuvre de l'assemblage comportant un dispositif de liaison et de blocage selon l'invention se déduit aisément de la description qui précède.

Le chevron 2 est préalabelemnt équipé, le cas échéant en usine, du doigt 12, la distance avec laquelle la tête épaulée 13 de celui-ci fait saillie sous le flasque 8 étant déterminée par construction, en ajustant l'épaisseur de la rondelle de blocage 8 avant que le doigt ne soit rigidement bloqué par le vissage de l'écrou 17 sur la partie filetée 15 de ce doigt.

Parallèlement, le monteur engage dans le profilé de support 1, à l'intérieur du logement ouvert 9 de la plateforme d'appui 6, la plaquette 11 du verrou, celle-ci se présentant d'abord sensiblement verticalement pour placer sa bordure 20 sous le bec 23 avant que le pivotement qui suit n'amène cette plaquette dans le logement de la façon représentée, l'extrémité inférieure 25 du talon 24 venant s'appuyer contre le fond de celui-ci.

Dans la phase suivante, on approche le chevron 2 du voile 3 du profilé de support 1, de telle sorte que la face 4 de ce dernier soit mise approximativement en contact avec le flan plan 5 du chevron 2, celui-ci étant ensuite abaissé sur l'épaulement 7 de la plateforme 6, de telle sorte que le doigt 12 engage sa tête épaulée 13 dans le trou de passage 27 de la plaquette, cette tête venant pratiquement dans le plan de la face inclinée 30 sous cette plaquette.

Les pièces 1 et 2 étant ainsi positionnées, il suffit au monteur de déplacer légèrement la plaquette 11 vis-à-vis du profilé de support 1, de manière que la tête 13 du doigt 12 s'engage selon le cas dans l'une ou l'autre des deux rainures 28 ou 29, la largeur de ces rainures inférieure à celle de la tête 13 permettant d'emprisonner cette dernière.

Du fait de l'angle fermé que forme chacune de ces rainures avec la face plane 4 du voile 3 d'une part, également de la légère inclinaison de la face 30 sous la plaquette 11 d'autre part, contre laquelle porte la tête 13, cette dernière subit ainsi en un seul mouvement un double déplacement, plaquant respectivement le chevron 2 contre le voile 3 et contre l'épaulement d'appui 7 pour aboutir en fin de course à une immobilisation parfaite vis-à-vis du profilé de support 1.

Avantageusement mais de façon en réalité facultative, la plaquette 11 peut être définitivement immobilisée par déformation et rabattement de l'ailette 32 portée par le rebord 31.

Le verrou constitué de la plaquette 11 et du doigt 12, portés par le profilé de support 1 et le chevron 2, se comporte ainsi comme un coin et transmet aux deux éléments de structure un effort combiné dans le sens vertical et horizontal, consécutivement au mouvement de déplacement de la plaquette 11.

On réalise ainsi un assemblage comportant un dispositif de liaison très simple dans lequel les fonctions de serrage et de rapprochement des coupes des deux pièces à réunir s'effectuent en un seul mouvement. Le noeud formé présente une grande stabilité, la mise en oeuvre du verrou proposé étant simple et ne nécessitant aucun outillage spécifique. Le verrou est lui-même invisible et permet d'absorber facilement les tolérances éventuelles de fabrication du profilé de support et du chevron, ainsi que les tolérances complémentaires pour le perçage qui reçoit le doigt à tête épaulée.

Bien entendu, il va de soi que l'invention ne se limite pas à l'exemple de réalisation plus spécialement décrit ci-dessus en référence aux dessins annexés elle en embrasse au contraire toutes les variantes.

## Revendications

1. Assemblage formé d'un profilé de support (1) et d'un chevron (2) ou d'un élément de structure analogue, réunis par un dispositif de liaison et de blocage de l'un par rapport à l'autre, le profilé de support comportant une face plane de contact (4) contre laquelle s'applique le flan également plan (5) du chevron, ce dispositif de liaison étant constitué par un verrou en deux parties dont l'une en forme de plaquette (11) présente un trou de passage (27) pour la seconde partie, constituée par un doigt (12) à tête épaulée (13), ce passage étant prolongé dans la plaquette par au moins une rainure longitudinale (28, 29), dont la direction fait un angle fermé avec la face de contact du profilé de support, caractérisé en ce que le profilé de support (1) présente une plateforme (6), comprenant un épaulement d'appui (7) pour le chevron (2), cette plateforme s'étendant perpendiculairement à la face plane de contact (4) du profilé et délimitant avec le chevron un logement ouvert (9) recevant la plaquette du verrou qui comporte un talon (24) en appui sur la plateforme (6), le doigt (12) formant la seconde partie de ce verrou étant solidaire du chevron et s'étendant à partir de celui-ci pour disposer sa tête épaulée (13) au-delà du passage (27) prévu dans la plaquette (11) contre la surface de celle-ci, laquelle est taillée en coin pour former également un angle fermé avec le plan de l'épaulement d'appui (7).

2. Assemblage selon la revendication 1, caractérisé en ce que la plaquette (11) du verrou (10) comporte deux rainures identiques (28, 29), symétriques et opposées, débouchant transversalement dans le trou de passage (27) recevant le doigt (12) solidaire du chevron (2), la largeur de chacune de ces rainures étant telle que ce doigt puisse parcourir librement la rainure où il s'engage, en déplaçant le chevron vis-à-vis du profilé de support (1) pour appliquer étroitement son flan (5) contre la face plane (4) de contact de ce profilé.

3. Assemblage selon l'une quelconque des revendications 1 ou 2, caractérisé en ce que la plaquette (11) du verrou (10) présente un contour rectangulaire et comporte, selon l'un de ses grands côtés une bordure en saillie (20), à section droite à profil sensiblement circulaire, propre à être engagée dans une gorge (21) de même section ménagée dans le logement (9) de la plateforme (6) de l'épaulement (7) du profilé de support (1) qui reçoit cette plaquette.

4. Assemblage selon la revendication 3, caractérisé en ce que la plaquette (11) comporte à l'opposé de sa bordure en saillie (20) un talon plan (24), adapté à s'appuyer sur le fond du logement (9) pour immobiliser la plaquette vis-à-vis du profilé de support (1), consécutivement à l'engagement de sa bordure dans la gorge (21) du logement en position relevée et à un pivotement de cette bordure sur le profil circulaire de cette gorge vers l'épaulement (7).

5. Assemblage selon la revendication 4, caractérisé en ce que l'épaulement (7) du profilé de support (1) comporte un rebord extérieur évasé (31), qui ferme le logement (9) de la plateforme (6) au-delà du talon (24) de la plaquette (11), ce rebord étant muni d'une ailette déformable (32) de blocage de cette plaquette.

6. Assemblage selon l'une quelconque des revendications 1 à 5, caractérisé en ce que le doigt (12) à tête épaulée (13) porté par le chevron (2) comporte une extrémité filetée (15), coopérant de part et d'autre d'un perçage (16) du chevron respectivement avec un écrou (17) et une rondelle (18), immobilisant le doigt dans une position réglable où sa tête épaulée fait saillie sous le chevron sur une distance suffisante pour lui permettre de traverser le trou de passage (27) prévu dans la plaquette (11) du verrou (10) en venant en contact sur la face opposée (30) taillée en coin de celle-ci, de telle sorte que le déplacement de la plaquette par rapport au doigt provoque également et simultanément l'application du chevron contre l'épaulement.

## Patentansprüche

1. Anordnung mit einem Profilträger (1) und einem Sparren (2) oder ähnlichen Tragelement, die durch eine Vorrichtung zur gegenseitigen Verbindung und Verriegelung verbunden sind, wobei der Profilträger eine ebene Anlagefläche (4) aufweist, an welche die ebenfalls ebene Flanke (5) des Sparrens angelegt wird, diese Verbindungsvorrichtung von einem zweiteiligen Riegel gebildet ist, bei dem ein Teil in Gestalt einer Platte (11) ein Durchsteckloch (27) für das zweite Teil aufweist, das von einem Zapfen (12) mit einem Bundkopf (13) gebildet ist, dieser Durchlaß in der Platte durch wenigstens eine längsgerichtete Nut (28, 29) verlängert ist, deren Richtung mit der Anlagefläche des Profilträgers einen spitzen Winkel bildet,
dadurch gekennzeichnet, daß der Profilträger (1) eine Plattform (6) mit einer Stützschulter (7) für den Sparren (2) umfaßt, wobei sich die Plattform rechtwinklig zur ebenen Anlagefläche (4) des Profilstücks erstreckt und mit dem Sparren eine offene Aufnahme (9) begrenzt, welche die Riegelplatte aufnimmt, die einen sich an der Plattform (6) abstützenden hinteren Ansatz (24) aufweist, wobei der das zweite Teil dieses Riegels bildende Zapfen (12) mit dem Sparren fest verbunden ist und von ihm wegragt, um seinen Bundkopf (13) jenseits des in der Platte (11) vorgesehenen Durchlasses (27) an der Oberfläche der Platte anzuordnen, die keilförmig gestaltet ist, um mit der Ebene der Stützschulter (7) ebenfalls einen spitzen Winkel zu bilden.

2. Anordnung nach Anspruch 1,
dadurch gekennzeichnet, daß die Platte (11) des Riegels (10) zwei gleiche, symmetrische und entgegengesetzt gerichtete Nuten (28, 29) aufweist, die in Querrichtung in das Durchsteckloch (27) münden, das den mit dem Sparren (2) fest verbundenen Zapfen (12) aufnimmt, wobei die Breite jeder dieser Nuten so ist, daß dieser Zapfen in der Nut, in die er eindringt, frei beweglich ist, indem der Sparren in bezug auf den Profilträger (1) verstellt wird, um seine Flanke (5) an die ebene Anlagefläche (4) dieses Profilstücks eng anzulegen.

3. Anordnung nach einem der Ansprüche 1 und 2,
dadurch gekennzeichnet, daß die Platte (11) des Riegels (10) von rechteckigem Umriß ist und an einer ihrer Längsseiten einen herausragenden Rand (20) von zumindest annähernd kreisrundem Profilschnitt aufweist, der sich in einer Hohlkehle (21) von gleichem Querschnitt anordnen läßt, die in der diese Platte aufnehmenden Aufnahme (9) der Plattform (6) von der Schulter (7) des Profilträgers (1) ausgebildet ist.

4. Anordnung nach Anspruch 3,
dadurch gekennzeichnet, daß die Platte (11) an der ihrem herausragenden Rand (20) entgegengesetzten Seite einen ebenen hinteren Ansatz (24) aufweist, der am Boden der Aufnahme (9) abstützbar ist, um die Platte in bezug auf den Profilträger (1) festzustellen, nachdem ihr Rand in die Hohlkehle (21) der Aufnahme in aufrechter Stellung eingeführt und dieser Rand auf dem kreisrunden Profil dieser Hohlkehle zur Schulter (7) hin geschwenkt worden ist.

5. Anordnung nach Anspruch 4,
dadurch gekennzeichnet, daß die Schulter (7) des Profilträgers (1) einen nach außen geneigten Außenrand (31) aufweist, der die Aufnahme (9) der Plattform (6) jenseits des hinteren Ansatzes (24) der Platte (11) verschließt, wobei dieser Rand mit einer deformierbaren Rippe (32) zum Blockieren dieser Platte versehen ist.

6. Anordnung nach einem der Ansprüche 1 bis 5,
dadurch gekennzeichnet, daß der vom Sparren (2) getragene Zapfen (12) mit Bundkopf (13) ein mit Gewinde versehenes Endstück (15) aufweist, das beiderseits einer Bohrung (16) im Sparren mit einer Mutter (17) bzw. einer Klemmscheibe (18) zusammenwirkt, die den Zapfen in einer einstellbaren Stellung festhalten, in der sein Bundkopf vom Sparren nach unten um einen Betrag wegragt, der genügt, um es ihm zu ermöglichen, das in der Platte (11) des Riegels (10) vorgesehene Durchsteckloch (27) zu durchdringen, dabei sich an die entgegengesetzte, keilförmig ausgebildete Fläche (30) der Platte anzulegen, derart, daß die Verstellung der Platte in bezug auf den Zapfen auch und gleichzeitig das Anlegen des Sparrens an die Schulter hervorruft.

## Claims

1. Assembly formed of a support profile (1) and of a rafter (2) or of a similar structural element, these being joined together by a device for connecting and blocking one with respect to the other, the support profile including a flat contact face (4) against which the flank (5), also flat, of the rafter is applied, this connection device consisting of a catch made in two parts one of which, in the form of a small plate (11) has a passage hole (27) for the second part which consists of a pin (12) with a shouldered head (13), this passage being extended into the small plate by at least one longitudinal slot (28, 29), the direction of which makes an acute angle with the contact face of the support profile, characterized in that the support profile (1) has a platform (6) comprising a shoulder (7) on which the rafter (2) can rest, this platform extending at right angles to the flat contact face (4) of the profile and delimiting with the rafter an open housing (9) which accommodates the small plate of the catch which includes a heel (24) bearing on the platform (6), the pin (12) forming the second part of this catch being secured to the rafter and extending therefrom to situate its shouldered head (13) beyond the passage (27) provided in the small plate (11) against the surface thereof, which is cut as a wedge shape in order also to form an acute angle with the plane of the bearing shoulder (7).

2. Assembly according to Claim 1, characterized in that the small plate (11) of the catch (10) includes two identical slots (28, 29) which are symmetric and opposed and emerge transversely in the passage hole (27) accommodating the pin (12) secured to the rafter (2), the width of each of these slots being such that this finger can run freely along the slot in which it is fitted, shifting the rafter with respect to the support profile (1) so as to press its flank (5) tightly against the flat contact face (4) of this profile.

3. Assembly according to either one of Claims 1 and 2, characterized in that the small plate (11) of the catch (10) has a rectangular contour and includes, along one of its long sides, a projecting border (20) having a cross section of substantially circular profile which can be engaged in a groove (21) of the same section made in the housing (9) of the platform (6) of the shoulder (7) of the support profile (1) which accommodates this small plate.

4. Assembly according to Claim 3, characterized in that the small plate (11) at the opposite end to its projecting border (20) includes a flat heel (24) designed to press against the bottom of the housing (9) in order to immobilize the small plate with respect to the support profile (1) after its border has been engaged in the groove (21) of the housing in a raised position and after this border has been pivoted towards the shoulder (7) on the circular profile of this groove.

5. Assembly according to Claim 4, characterized in that the shoulder (7) of the support profile (1) has a flared exterior rim (31) which closes the housing (9) of the platform (6) beyond the heel (24) of the small plate (11), this rim being equipped with a deformable fin (32) for blocking this small plate.

6. Assembly according to any one of Claims 1 to 5, characterized in that the pin (12) with shouldered head (13) borne by the rafter (2) includes a threaded end (15) interacting on either side of a pierced hole (16) in the rafter respectively with a nut (17) and a washer (18), immobilizing the pin in an adjustable position in which its shouldered head projects under the rafter for sufficient distance to allow it to pass through the passage hole (27) provided in the small plate (11) of the catch (10) while coming into contact on the opposite face (30) thereof, which face is cut as a wedge, in such a way that the shifting of the small plate with respect to the pin also and at the same time causes the rafter to be applied against the shoulder.
